# EUROPEAN PATENT APPLICATION

(11) **EP 2 119 908 A1**
(43) Veröffentlichungstag der Anmeldung: **18.11.2009**
(21) Anmeldenummer: 08724088.3
(22) Anmeldetag: 15.02.2008
(51) Int. Cl.: F03D 5/02

(54) **WINDGETRIEBENE, SEGELUNTERSTÜTZTE ENERGIEANLAGE (VARIANTEN), SELBSTAUSRICHTENDE PLATTFORM EINER WINDGETRIEBENEN, SEGELUNTERSTÜTZTEN ENERGIEANLAGE UND WINDANLAGE**

(30) Priorität: 05.03.2007 RU 2007108125
(71) Anmelder: MIKHEYEV, Alexander Alexandrovich, Tula 300004 (RU)
(72) Erfinder: MIKHEYEV, Alexander Alexandrovich, Tula 300004 (RU)
(74) Vertreter: Jeck, Anton
(86) Internationale Anmeldenummer: PCT/RU2008/000087
(87) Internationale Veröffentlichungsnummer: WO 2008/108684

(57) **Zusammenfassung**

Die Erfindung betrifft ein Segelwindkraftwerk mit Segelelementen. Die Segelwindkraftanlage nutzt die große Fläche des Windstroms mit hohem Wirkungsgrad aus und ist dennoch gegenüber böigen Windstößen unempfindlich, wenn die Ausgestaltung so vorgenommen ist, dass mindestens zwei endlos geschlossene starre Führungsschienen vorgesehen sind, die mit mindestens drei Rollelementen einen Innenzugkreis bilden, dass mindestens drei Segelelemente mittels Stangen an dem Innenzugkreis befestigt sind, dass die anderen Seiten der Segelelemente mittels anderer Stangen mit Rollelementen von geschmeidigen Getrieben eines Außenzugkreises verbunden sind und dass die Zug- und/oder Drehelemente des Außen- und/oder Innenkreises kinematisch mit einem Generator für elektronische und/oder mechanische und/oder thermische und/oder chemische Energie verbunden sind.

## Beschreibung

Die Erfindung betrifft eine Segelwindkraftanlage mit Segelelementen.

Die Erfindung betrifft den Einsatz von erneuerbaren Energiequellen, nämlich die Windenergie, sowie ihre Umwandlung in elektrische Energie.

Es sind karussellartige Windkraftanlagen (WKA) bekannt [Russisches Erfinderzertifikat Nr. 1017814, veröffentlicht 1982], die aus einer Vertikalachse und den darauf befestigten Segelelementen besteht. Die Segelelemente sind so befestigt, dass ihre Segelfläche an einer Seite maximal und an der anderen Seite minimal ist, wodurch ein Drehmoment erzeugt wird.

Es ist eine Windkraftanlage (WKA) mit Einsatz von einem segelförmigen Hauptarbeitselement bekannt, welches auf einer Bühne aufgebaut ist. Die Bühne ist ihrerseits so zusammengesetzt, dass der Anfang und das Ende einen Ring bilden. Diese zusammengesetzte Konstruktion wird auf einer Kreisbahn aufgestellt, die den Abmessungen der Bühne entspricht. Das Segel weist den höchsten Windenergieausnutzungsfaktor auf. Die durch die Anlage entwickelte Leistung wird an der Radwelle der Bühne abgenommen. (Patent der RF Nr. 22125182).

Die Nachteile dieser Windkraftanlage sind wie folgt:
1. Die Vollleistung des Segels entfällt nur auf 25 % des Kreisweges.
2. 50 % des Weges laufen die Bühnen leer und entnehmen die Energie der Windkraftanlage.
3. Die Bühnen sind sehr schwer, was ebenfalls den Wirkungsgrad der Windkraftanlage reduziert.
4. Das geschlossene Schienengleis mit Bühnen nimmt eine große Fläche ein.
5. Die Windkraftanlage muss ständig unter sicherheitstechnischer Kontrolle sein.

Die modernen Windflügel- und Turbinen-Windkraftanlage, welche in Deutschland und in anderen Ländern Europas eingesetzt werden, weisen folgende Nachteile auf:
1. Ein geringer Kennwert der Windenergieentnahme, weil der Flügel die Windenergie nur innerhalb von 30 % des Kreisweges aufnimmt. Die übrigen 70 % des Kreisweges bleiben unwirksam.
2. Der Flügel wirkt nur mit einem sehr engen Bereich des Windstroms zusammen, welcher der Arbeitsfläche des Flügels entspricht. Das heißt, dass der Hauptstrom des Windes am Flügel vorbei läuft. Damit geht auch nicht ausgenutzte Windenergie verloren.
3. Die Windkraftanlage mit Flügeln sind empfindlich gegenüber böigen Windstößen.
4. Die Errichtung der Flügel-Windkraftanlage setzt einen erheblichen Zeit- und Kapitalaufwand voraus. Das erhöht den Preis für ein Kilowatt Leistung wesentlich.
5. Die Flügel-Windkraftanlage gefährdet die Vögel. Sie hat sehr starke Lärmemissionen und wirkt rein optisch deprimierend auf den Personalbestand ein.
Es ist Aufgabe der Erfindung eine Windkraftanlage zu entwickeln, welche die große Fläche des Windstroms effektiv mit hohem Wirkungsgrad ausnutzt und gegenüber böigen Windstößen unempfindlich ist.

Die gestellte Aufgabe wird durch Merkmale der Ansprüche 1 und 5 gelöst.

Die Erfindung wird anhand von in den Zeichnungen dargestellten Ausführungsbeispielen näher erläutert. Es zeigen:
- Fig. 1: eine Gesamtansicht einer Windkraftanlage (nachfolgend WKA) mit Ketten-, Riemen- oder Seilgetrieben des Außenkreises,
- Fig. 2: eine Gesamtansicht der Windkraftanlage (nachfolgend WKA) für eine industrielle Stromerzeugung und

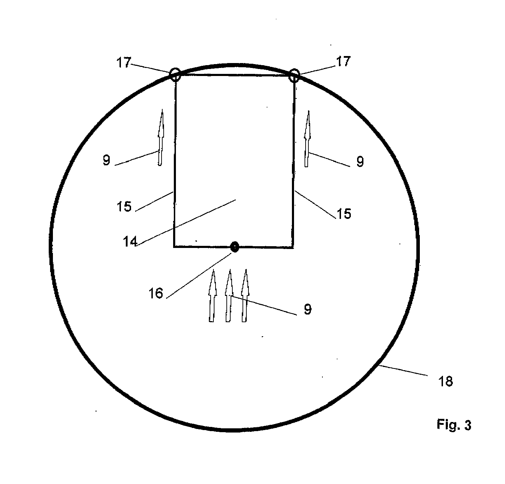

- Fig. 3: eine selbstausrichtende Bühne der Segelwindkraftanlage (nachfol- gend WKA) in Draufsicht (die Zeichnung ist ohne Einhaltung des Maßstabs).

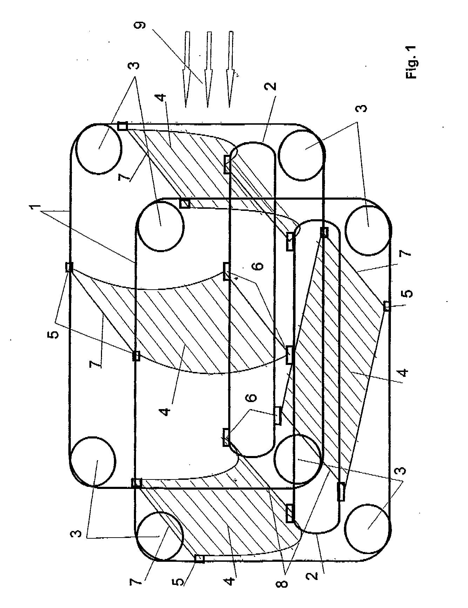

Die Windkraftanlage gemäß Fig. 1 enthält:
- einen Tragrahmen (in der Zeichnung nicht abgebildet),
- mindestens zwei endlos geschlossene Zugmittelgetriebe 1 (Riemen-, Ketten-oder Seilgetriebe) des Außenkreises,
- mindestens zwei endlos geschlossene starre Führungsschienen 2 des Innenkreises,
- mindestens zwei (oder besser vier und mehr) Kettenräder 3 für Kettengetriebe oder mindestens zwei (oder vier und mehr) Scheiben 3 für Riemen- bzw. Seilgetriebe des Außenkreises,
- mindestens drei segelförmige Elemente 4 mit rechteckiger, trapezförmiger oder anderer Geometrie,
- Halterungen 5 für die Stangen des Außenkreises,
- mindestens drei Gleitelemente 6, zum Beispiel Schlitten, für jede starre Führungsschiene 2 des Innenkreises,
- Stangen 7 der Segelelemente 4, welche am Außenkreis befestigt sind,
- Stangen der Segelelemente 4, welche an den Rollelementen 8 des Innenkreises befestigt sind,
- mindestens zwei jedoch bei weitem effektiver vier geschlossene geschmeidige Getriebe (Riemen-, Ketten- oder Seilgetriebe) mit Scheiben und/oder Kettenrädern (nachfolgend geschmeidige Getriebe), die an den Seiten der WKA installiert sind,
- zwei Getriebe davon werden durch die Schlitten 6 und/oder Stangen 8 des Innenkreises angetrieben. Zwei Getriebe werden durch die Stangen 7 des Außenkreises angetrieben. Dabei haben diese Stangen 7, 8 Eingriffselemente zum Ineinandergreifen mit geschmeidigen Getrieben.

Danach wird die Welle des Stromerzeugers mittels der Wellen, an denen diese Scheiben und/oder Kettenräder (in der Zeichnung nicht abgebildet) montiert sind, angetrieben.

Die Richtung des Windstroms ist mit Pfeilen 9 dargestellt.

### Die Windkraftanlage (nachfolgend WKA) funktioniert in folgender Weise:

Der Wind setzt das Segel 4 in Bewegung, welches mittels der Stangen 7 die biegsamen Elemente 1 des Außenkreises (Kette oder Riemen) hinter sich her zieht. Diese biegsamen Elemente treiben ihrerseits Kettenräder oder Scheiben 3 an. Die Rotation der Kettenräder oder Scheiben 3 wird an den Stromerzeuger übertragen. Die endlos geschlossenen geschmeidigen Getriebe 1, zusammen mit den an ihnen befestigten Stangen 7, laufen bei der Drehung der Scheiben oder Kettenräder 3 um. Dabei ist mindestens ein Segel 4 immer offen und wirkt als Treiber. Zwei (oder mehr) andere Segel sind geschlossen und werden angetrieben. Sie übernehmen abwechselnd die Funktion der geöffneten Antriebssegel.

Die Stangen 7 des Außenkreises des Segelelements 4 sind an den biegsamen Elementen 1 befestigt und äquidistant untereinander angeordnet. Die Stangen 8 des Segelelements 4 sind an den Rollelementen 6 befestigt und ändern ihren Abstand voneinander, da die Bewegung der Rollelemente 6 beim Kurvenlauf angehalten wird. Dabei laufen die Rollelemente 6 auf den geschlossenen starren Führungsschienen 2 des Innenkreises. Die Übertragung der Rotationsbewegung an den Stromerzeuger kann über alle Zug- und/oder Rotationsorgane der WKA erfolgen. Diese Organe umfassen:
1. Wellen (Achsen), an denen die Scheiben und/oder Kettenräder 3 des Außenkreises, die Stangen 7 des Außenkreises sowie die Stangen 8 und Schlitten 6 des Innenkreises installiert sind.
2. Geschmeidige Getriebe 1 mit Scheiben 3 und/oder Kettenrädern, welche durch die Stangen 7 des Außenkreises angetrieben werden.
3. Geschmeidige Getriebe 1 mit Scheiben 3 und/oder Kettenrädern, welche durch die Schlitten 6 und/oder Stangen 8 des Innenkreises angetrieben werden.

Bei sehr starken Windstößen können die Riemen- und die Seilgetriebe um die Scheiben durchdrehen, ohne dass die Rotationsenergie an den Generator weitergeleitet wird. Die geschlossene Kettenübertragung fällt beim Dauerbetrieb ebenfalls aus, da sie keine großen und andauernden Belastungen aushalten kann.

Wenn Kette + Riemen bzw. Kette + Seil zu einem Arbeitsstrang vereinigt werden, kommt die gesamte Zugbelastung auf das langlebige Seil oder Riemen zu. Die Kette springt nur zeitweise, nämlich nur bei starken Windstößen, ein und lässt kein Durchdrehen des Riemens oder des Seils um die Scheibe zu.

Somit ermöglicht die vorgeschlagene WKA, die Windenergie einer großen Windstromfläche effektiv und mit hohem Wirkungsgrad auszunutzen. Dank der verhältnismäßig langsamen Bewegung der Segelelemente (im Vergleich zu den Windturbinen) ist die WKA sowohl für Menschen als auch für Tiere gefahrlos und erzeugt keinen Lärm, keinen Infraschall und keine Funkstörungen.

Die vorgeschlagene Anlage ist am besten für kleine Energieverbraucher (Einzel- und Landhäuser sowie für geologische und andere Forschungsexpeditionen) geeignet. Eine solche Anlage kann als zerlegbare Vorrichtungen gefertigt und gegebenenfalls leicht zusammengebaut werden. Der Wind ist im Gebirge, in der Arktis und der Antarktis immer vorhanden.

Für die gewerbliche Energieerzeugung ist die oben beschriebene Anlage noch leistungsarm.

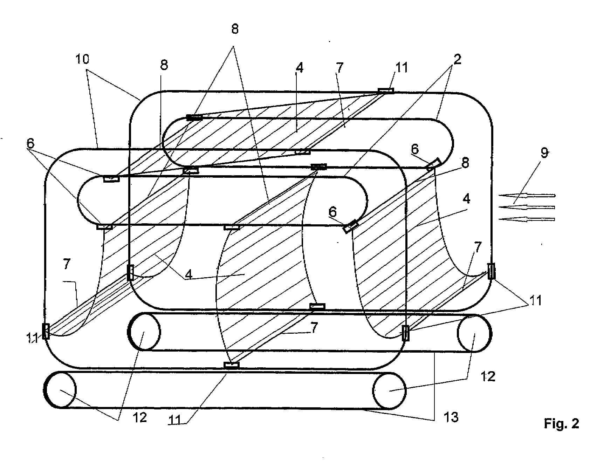

In Fig. 2 ist eine Segel-WKA für die Industriestromerzeugung sowie zur gewerblichen Erzeugung von anderen Energiearten abgebildet.

### Die Anlage zur Industriestromerzeugung beinhaltet:

- einen Tragrahmen (in der Zeichnung nicht abgebildet), an dessen Gegenseiten folgende Komponenten installiert sind:
   - mindestens zwei endlos geschlossene starre Führungsschienen 10, die mit mindestens drei Rollelementen 11 (z. B. Schlitten) an jeder Führungsschiene 10 versehen sind und einen Außenkreis bilden,
   - mindestens zwei endlos geschlossene starre Führungsschienen 2, die ebenfalls an Gegenseiten angeordnet, mit mindestens drei Rollelementen 6 auf jeder Führungsschiene 2 versehen sind und einen Innenkreis bilden,
   - mindestens drei segelförmige Elemente 4 mit rechteckiger, trapezförmiger oder anderer Geometrie,
      Eine Seite der Segelelemente 4 ist mittels Stangen 7 an den Rollelementen 11 des Außenkreises in gleichem Abstand zueinander festgemacht. Die andere Seite der Segelelemente 4 ist mittels Stangen 8 an den Rollelementen 11 auf den Führungsschienen 2 des Innenkreises befestigt.

Diese WKA enthält auch mindestens zwei jedoch bei weitem effektiver vier (zwei pro jeden Kreis) geschlossene geschmeidige Getriebe 13 (Riemen-, Ketten- oder Seilgetriebe) mit Scheiben und/oder Kettenrädern 12 (nachfolgend geschmeidige Getriebe). Die Getriebe 13 sind an den Seiten der WKA installiert. Zwei Getriebe davon werden durch die Schlitten 6 und/oder Stangen 8 des Innenkreises angetrieben, und zwei Getriebe werden durch die Schlitten 11 und/oder Stangen 7 des Außenkreises angetrieben, wobei diese Schlitten 7 bzw. Stangen 11 Eingriffselemente zum Ineinandergreifen mit geschmeidigen Getrieben 1 haben. Die Welle des Stromerzeugers wird mittels Wellen, an denen Scheiben und/oder Kettenräder montiert sind, angetrieben.

In Fig. 2 ist das geschmeidige Getriebe 13 mit Kettenrädern und/oder Scheiben 12 versehen, welches die Energie auf die Welle des Generators vom Außenkreis überträgt. Es sind auch geschmeidige Getriebe vorhanden, welche die Energie vom Innenkreis weiterleiten (in der Zeichnung nicht abgebildet).

Die Rollelemente 6, 11 und die Stangen 7, 8 des Außen- und des Innenkreises sind mit Zähnen versehen, welche in das endlos geschlossene Kettengetriebe mit den Kettenrädern oder in andere Eingriffselemente (bei Seil- oder Riemengetriebe) eingreifen. Die Eingriffselemente sind mittels rotierenden Wellen mit dem Generator für elektrischen Strom oder für andere Energiearten kinematisch gekoppelt. Die Zahnteilung der Schlitten 6 und 11 ist gleich der Kettengliedteilung. Die Stangen 7 und 8 sind mit Eingriffeselementen zum Ineinandergreifen mit dem Kettengetriebe versehen.

Gemäß einer der Ausführungsformen ist der Innenkreis beider WKA aus endlos geschlossenen Ketten-, Riemen- oder Seilgetrieben ausgeführt, welche sich unabhängig voneinander bewegen. Dabei fällt die Anzahl der Stränge (der Getriebe) mit der Anzahl der Segelelemente zusammen. Jeder Rand der Stangen der Segelelemente ist an je einem flexiblen Element des Innenkreises an jeder Seite befestigt.

Der Abstand zwischen den Stangen 8 des Innenkreises wird beim Anlagenbetrieb variabel sein, weil die Rollelemente 6 des Innenkreises beim Kurvenlauf anhalten werden.

Die Rollelemente 6 mit den befestigten Stangen 8 der Segelelemente 4 des Innenkreises werden immer äquidistant sein. Das ist durch den geschmeidigen Antrieb (Riemen, Kette, Seil) verursacht, welcher die Schlitten 5 oder die Stangen 7 des Außenkreises miteinander verbindet.

Das flexible Element, welches die Äquidistanz der Segelelemente 4 im Außenkreis sicherstellt, ist an je einem Schlitten 5 oder am Rand der Stange 7 befestigt. Es umfasst dabei die Führungsscheiben oder die Kettenräder und die Spannelemente, welche auf der Laufbahn des Außenkreises angeordnet sind. In beiden WKA ist der Abstand zwischen den Führungsschienen 10 des Außenkreises und den Führungsschienen 2 des Innenkreises mit der Höhe des entfalteten Segels gleich. Die Segelelemente 4 sind im Betrieb geöffnet. Der Abstand zwischen den Führungsschienen 2, 11 der Kreise, auf denen die Segelelemente 4 geführt und inaktiv sind, ist minimal und reicht für den Durchgang der Segelelemente 4 im zusammengelegten Zustand aus.

In beiden Ausführungsformen der WKA ist die waagerechte Dimension des geschlossenen Innenkreises entweder ebenso groß oder etwas kleiner als die des geschlossenen Außenkreises. Dies gilt für den Fall, wenn die Bewegungselemente von einem Zug- und Trägerkreis in einer konkreten Konstruktion die Bewegungselemente des anderen Zug- und Trägerkreises stören. Die senkrechte Dimension des Außenkreises ist um das sieben- bis zehnfache größer als die des geschlossenen Innenkreises. Der waagerechte Arbeitshub des Segelelements 4 ist um das zweifache oder größer als das in der Höhe entfaltete Segelelement 4.

### Die Funktionsweise der Anlage ist wie folgt:

Der Windstrom 9 setzt (das rechteckige oder trapezförmige) Segelelement 4 in Bewegung. Jedes Paar der Schlitten 11 des Außenkreises bewegt sich in seinem jeweiligen Arbeitsabschnitt des Weges (wenn das Segel, welches durch dieses Paar der Schlitten 11 gehalten wird, offen ist). Die Schlitten 11 des Außenkreises sind Antriebsschlitten und ziehen die anderen Schlittenpaare mittels eines Drahtzuges hinter sich her. Die anderen Schlittenpaare sind auf diesem Weg- und Zeitabschnitt angetrieben. Danach übernimmt das nächste Segelelement 4 die Antriebsfunktion. Das vorherige Antriebssegelelement wird angetrieben, zusammengefaltet und läuft den inaktiven Weg zwischen den Führungsschienen 2 des Innen- und den Führungsschienen 10 des Außenkreises. Dabei reißt es die Stange 8 des Segelelements 4 mit sich, welches an den Schlitten 6 des Innenkreises befestigt ist. Der Arbeitsabschnitt des Weges des Segelelements 4 fängt an einem Punkt des Außenkreises (Führungsschiene 10) an. Wenn die Stange 7 an diesem Punkt ankommt, richtet sich die Stange 8 auf, die an den Schlitten 6 des Innenkreises (Führungsschiene 2) befestigt ist und senkrecht zu der Stange 7 des Außenkreises steht. Das Segelelement 4 entfaltet sich vollständig und fängt seinen Arbeitsabschnitt des Weges an. Der beschriebene Zyklus wiederholt sich ununterbrochen.

Die Übertragung der Rotationsbewegung an den Stromerzeuger kann von allen Zug-und/oder Rotationsorganen der WKA erfolgen. Diese Organe umfassen:
1. Geschmeidige Getriebe 1 mit Scheiben und/oder Kettenrädern 3, welche durch die Schlitten 5 und/oder Stangen 7 des Außenkreises angetrieben werden.
2. Geschmeidige Getriebe mit Scheiben und/oder Kettenrädern 3, welche durch die Schlitten 6 und/oder Stangen 8 des Innenkreises angetrieben werden.
3. Stangen 7, 8 und/oder Schlitten 5, 6 des Außen- und des Innenkreises. Wenn das geschmeidige Getriebe aus einem endlos geschlossenen Kettengetriebe ausgeführt ist, wird die Rotationsbewegung auf den Generator folgenderweise übertragen (am Beispiel des Kettengetriebes, welches die Energie von den Stangen 7 und Schlitten 5 des Außenkreises aus der Zeichnung übertragen):
   Die Schlitten 11 des Außenkreises sind mit Stift-Zähnen (in der Zeichnung nicht abgebildet) versehen. Die Stift-Zähne treiben während der Bewegung der Schlitten 11 und auf dem Arbeitsabschnitt des Weges mittels des Eingriffs der endlos geschlossenen Kette 13 in den Kettenrädern 12 an. Die Länge des waagerechten Weges der Kette 13 ist etwas größer oder mindestens nicht kürzer als die des waagerechten Wegabschnittes des Schlittens 11. Die Kettenräder sind über die Rotationswellen auf den Stift-Zähnen aufgebaut. Die Rotationsenergie wird an den Generator für elektrische und andere Energien weitergeleitet.

In der ersten und der zweiten WKA kann die Funktion des Kettengetriebes 13 auf die Kettenräder 12 (nämlich die Energieübertragung vom Außenkreis) und die Funktion des Kettengetriebes (die die Energieübertragung vom Innenkreis) durch die endlos geschlossenen Seile oder Riemen auf den Scheiben ausgeführt werden. Dabei sind die Rollelemente (Schlitten) und die Stangen des Innen- und des Außenkreises mit Eingriffselementen zum Ineinandergreifen mit dem Seil- oder Riemengetriebe versehen.

Um einen gleichmäßigen Betrieb des Generators bei Windstößen sicherzustellen, wird die Rotationsbewegung in der ersten und der zweiten WKA zuerst an eine Überholungskupplung und dann an ein Schwungrad (in der Zeichnung nicht abgebildet) weitergeleitet. Dann wird sie an die Welle eines Stromerzeugers bzw. eines Umformers für chemische, Warm- oder mechanische Energie übertragen. Gegebenenfalls werden auf einmal zwei oder mehr Energiearten erzeugt, z. B. elektrische + Wärmeenergie, oder elektrische + chemische Energie usw. in verschiedenen Kombinationen.

Um die Effektivität zu erhöhen, werden die Segel-WKA mit Windstromkonzentrationseinrichtungen versehen. Dies ermöglicht bei geringer Windstärke mehr Strom zu erzeugen.

In verschiedenen Ausführungsformen können die starren Führungsschienen und die geschmeidigen Zugelemente der Segel-WKA senkrecht oder waagerecht zum Boden angeordnet werden.

In allen Anlagen haben die starren Führungsschienen und die geschmeidigen Getriebe jedes Kreises, welche entgegengesetzt in Bezug auf das Segelelement angeordnet sind, die gleichen Abmessungen und sind parallel zueinander angeordnet.

Um den Dauerbetrieb der WKA sicherzustellen, werden die starren Führungsschienen der WINDKRAFTANLAGE aus Schienen, Doppel-T-Trägern oder Profilen ausgeführt. Die Schienen, die Doppel-T-Träger oder die Profile werden dabei aus Metall oder Verbundstoffen gefertigt. Die Schlitten können in der waagerechten, senkrechten und umgekehrten Position auf den geschlossenen starren Führungsschienen verfahren.

An der Küste des Nördlichen Eismeeres hat der Wind zwei saisongebundene Richtungen. Im Sommer vom Ozean zum Kontinent und im Winter umgekehrt. Es ist zweckmäßig, die Segel-WKA nach dem Batterienprinzip zusammenzufügen. In diesem Fall ist jeder Zugkreis das Arbeitselement von gleichzeitig zwei Segelwindkraftanlagen und trägt gleichzeitig zwei Segelstangen an den Seiten der stehenden WKA. Im Endeffekt werden halb soviel Zubehörteile auf der benutzten Fläche des Windstroms eingesetzt.

Zusätzlich zu den Vorteilen der WKA mit flexiblen Elementen haben die vorgeschlagenen WKA mit starren Führungsschienen folgende Vorteile:
- eine verlängerte Lebensdauer der gesamten Anlage,
- geringere Wartungskosten, Kontrolle des Zustands der Zubehörteile und des geringeren Kilowattpreises,
- die WKA mit starren Führungsschienen kann unter viel härteren Klimabedingungen betrieben werden. Sie arbeitet bei einem Temperaturgefälle (von -30 °C bis + 50 °C) und bei starken Windstößen von bis zu 50 m/Sek.

Bei modernen WKA ist der Betreiber bei Windumschlägen gezwungen, die Anordnung der Anlage entweder selbst oder computergestützt zu ändern. Das ergibt zusätzliche Unbequemlichkeiten, da die WKA überwacht werden muss.

Die technische Aufgabe besteht nun auch darin, den Menschen von dieser Verpflichtung zu befreien.

### Die gestellte Aufgabe wird folgenderweise gelöst:

Die Segel-WKA wird auf einer Bühne 14 aufgestellt, welche mit einem Mantel oder mit seitlichen Bordwänden 15 versehen ist. Die Seitenwände 15 des Mantels werden die Windfahnenfunktion übernehmen. Der Bühnensockel ist an der Eintrittsstelle des Windstroms starr an einer Achse 16 befestigt. Die gesamte WKA ist um diese Achse um 360° in der waagerechten Ebene drehbar. Die Gegenseite der Bühne 14 ist auf Rollelemente (Räder oder Walzen) 17 gesetzt, welche auf der kreisförmig geschlossenen Einschienenbahn 18 verfahren.

### Die Funktion der Segelwindkraftanlage auf der selbstausrichtenden Bühne ist wie folgt:

Der Wind wird danach streben, die Mantelwände 15 entlang der Windrichtung 9 zu positionieren. Dabei übernehmen die Mantelwände 15 die Windfahnenfunktion. Der an der Achse 16 befestigte Bühnensockel (Eintrittsstelle des Windstroms) und die auf die Räder 17 gesetzte Gegenseite der Bühne 14 (Austrittsstelle des Windstroms) ermöglichen, dass der Windstrom 9 die selbstausrichtende Bühne 14 immer entlang der Windrichtung 9 festhält. Die Segelelemente 4 werden immer quer zum Windstrom 9 sein. Um die Effektivität zu erhöhen, wird die Segel-WKA mit Windstromkonzentrationseinrichtungen versehen. Das ermöglicht, mehr Strom bei geringer Windstärke zu erzeugen.

Die im Mantel eingefasste Segel-WKA ergibt drei positive Effekte:
1. Der Mantel verhindert eine Winddivergenz beim Zusammenstoß mit dem Segel. Es wird mehr Energie erzeugt.
2. Der Mantel dient als Windfahne und stellt die WKA in die erforderliche Position ein. Dadurch wird der Betreiber von einer überflüssigen Kontrolle der WKA befreit.
3. Der Mantel wirkt als Tragrahmen, was seine Konstruktion vereinfacht.

Die Fläche zur Ausnutzung der Segel-WKA auf der selbstausrichtenden Bühne 14 kann manchmal begrenzt sein, zum Beispiel auf einem Schiff. Dann wird der Tragrahmen an der Achse 16 mittig oder zwischen der Eintrittsstelle des Windstroms und der Mitte befestigt. Die Seiten des Tragrahmens sind an der Ein- und Austrittsstelle des Windstroms 9 auf Autoräder oder Walzen 17 gesetzt. Die Autoräder oder Walzen 17 verfahren auf der kreisförmig geschlossenen Einschienenbahn 18. Es können auch andere Rollelemente 17 eingesetzt werden.

Um eine Kompaktheit und eine Konstruktionsvereinfachung sicherzustellen, wird der Stromerzeuger auf dem Tragrahmen befestigt. Die Stromleiter sind über den Hohlraum der Welle der Drehachse der selbstausrichtenden Bühne 14 oder daneben zugeführt.

Die Segel-WKA mit geschmeidigen Getrieben ist leicht von Gewicht. Deswegen kann sie zerlegbar ausgebildet werden. Sie kann leicht transportiert und aufgebaut werden. Jedoch setzt die WKA mit geschmeidigen Getrieben Pflege, Ketten- und Scheibenschmierung sowie die Überwachung des Zustandes und der Spannung der flexiblen Elemente voraus. Die Segel-WKA mit starren Führungsschienen haben diese Mängel nicht. Die Standzeit der Schlittenlaufleistung auf den starren Führungsschienen ist um vielhundertmal höher als bei flexiblen Elementen.

Wenn Qualitätszubehörteile eingesetzt werden, kann die WKA mit starren Führungsschienen auf einer selbstausrichtenden Bühne 14 sehr lange, mit minimaler Kontrolle der Betreiber und mit hohem Wirkungsgrad arbeiten.

Eine bodengestützte Segel-WKA ist wesentlich günstiger, sicherer, optisch ästhetischer und umweltfreundlicher als eine Turm-Flügel-WKA, wie sie heutzutage betrieben werden.

Die Höchstgeschwindigkeit der Segelbewegung bei Windstößen von 30 m/Sek wird ca. 1 - 3 (max. 5) Meter pro Sekunde betragen. Das heißt, es werden keine Funkstörungen im Unterschied zu einer Flügel-WKA ausgestrahlt.

Der zu prognostizierende Wirkungsgrad wird ca. 40 % bis 60 % der Energie des aufgenommenen Windstroms betragen und zwar je nach der Anzahl der Segelelemente. Im Unterschied zu Turm-Windflügel ist die bodengestützte Segel-WKA nicht empfindlich gegenüber böigen Windstößen von 30 - 40 m/Sek. Das setzt jedoch eine entsprechende Generatorleistung voraus.

Die Segel-WKA kann nicht nur zur Stromerzeugung, sondern auch zum Antreiben von Fahrzeugen eingesetzt werden.

1924 hat der französische Ingenieur Constantin versucht, eine Idee aus dem 18. Jahrhundert wiederzuerwecken und vorgeschlagen, Aeromotoren zum Ingangsetzen von Schiffen einzusetzen. Die Rotation der Welle des Aeromotors wird mittels Transmission, die aus einem Doppelwinkelrädertrieb und einer Welle besteht, an die übliche Schiffsschraube übertragen. Dieses Wasserfahrzeug ist ein entferntes Vergleichserzeugnis aus dem Patent RU2052658.

Der nächst kommende Stand der Technik gegenüber der vorgeschlagenen Erfindung ist die Erfindung des französischen Schiffbauers M. Mar (Französisches Patent Nr. 2607557). Er hat vorgeschlagen, ein Windrad (Propeller) als Vortriebsmittel anzuwenden. Der Dreiflügelläufer treibt einen Generator an und die gewonnene elektrische Energie versorgt einen Elektromotor, der die Schiffsschraube in Drehbewegung versetzt.

Die Nachteile dieser Windanlage sind wie folgt:
1. Eine geringe Schiffsgeschwindigkeit wegen dem geringen Wirkungsgrad der Flügel-WKA.
2. Eine Instabilität des Schiffs infolge großer Abmessungen der WKA und der Schwingungen bei Windstößen.
3. Die durch WKA erzeugten Funkstörungen, die die Funkverbindung mit der Umwelt unmöglich machen.
4. Die Nähe zu den Drehflügeln wirkt deprimierend auf den Personalbestand des Schiffes ein.

Die weiterführende technische Aufgabe der Erfindung ist eine WKA zu entwickeln, die betriebsfreundlich, kompakt ist und einen hohen Wirkungsgrad aufweist.

Die gestellte Aufgabe wird durch die Anwendung der neuen Konstruktion gelöst.

Die Windanlage besteht aus einem Wasser- oder Landfahrzeug und der darauf aufgebauten Segel-WKA mit einer selbstausrichtenden Bühne. Die Funktionsweise der Windanlage ist wie folgt:

Bei einem kleinen Wasserfahrzeug wird das Drehmoment der WKA mittels Transmission direkt auf die Schiffsschraube übertragen. Ist das Schiff länger als 10 Meter, wird das Drehmoment zuerst zu einem Stromerzeuger weitergeleitet. Dann kommt die Energie über Stromleiter an einen Motor und wird wieder in mechanische Energie umgesetzt und an die Schiffsschraube weitergeleitet. Bei Windumschlägen oder bei Schiffkursänderungen dreht sich die Segel-WKA auf der selbstausrichtenden Bühne quer zum Wind um. Dadurch kann das Schiff gegen den Wind mit derselben Geschwindigkeit wie windwärts steuern.

Die Segel-WKA kann auch auf Landfahrzeugen aufgebaut werden. In diesem Fall wird die mechanische Energie der WKA für die Rotation eines Räderwerkes oder einer anderen Antriebsvorrichtung für das Fahrzeug benutzt werden.

Zum Beispiel ist der Wind im hohen Norden immer sehr stark. Das ist eine unerschöpfliche Energiequelle, die die Kohlenwasserkraftstoffe ersetzen kann. Die Verkehrsmittel können sich gegen den Wind fast mit derselben Geschwindigkeit als auch mit dem Wind bewegen. Dabei wird überhaupt kein Kraftstoff verbraucht.

Während einer Fahrtpause werden die Akkus geladen. Die mechanische Energie wird dabei in chemische Energie umgesetzt.

Die Segel-WKA mit einer selbstausrichtenden Bühne wird auf dem Fahrzeug über dem Fahrerinnenraum bzw. darunter je nach dem Konstruktionsbedarf aufgebaut. Um die Vogelsicherheit sicherzustellen, wird die Eintrittsstelle des Windstroms mit einem Gitter (Netz) versehen, welches verhindert, dass die Vögel in die Anlage geraten. Dabei stört dieses Gitter den eigentlichen Windstrom nicht. Wenn der Vogel zufällig doch in die Anlage gerät, so wird er zusammen mit dem Segelelement dessen Arbeitsweg passieren und ungestört mit den Windstromresten hinausfliegen. Wenn die Anlage mit mindestens drei Segelelementen versehen ist, so werden zwei Segelelemente 20 % der Zeit geöffnet und somit aktiv sein. 80 % der Zeit wird nur ein Segelelement geöffnet sein, und zwei Segelelemente werden inaktiv sein. Um die Windenergie möglichst voll auszunutzen, werden fünf und mehr Segelelemente verwendet.

## Patentansprüche

1. Segelwindkraftanlage (WKA) mit Segelelementen,
**dadurch gekennzeichnet,**
**dass** mindestens zwei endlos geschlossene starre Führungsschienen (2) vorgesehen sind, die mit mindestens drei Rollelementen (6) einen Innenzugkreis bilden,
**dass** mindestens drei Segelelemente (4) mittels Stangen (8) an dem Innenzugkreis befestigt sind,
**dass** die anderen Seiten der Segelelemente (4) mittels anderer Stangen (7) mit Rollelementen (5) von geschmeidigen Getrieben (1) eines Außenzugkreises verbunden sind und
**dass** die Zug- und/oder Drehelemente des Außen- und/oder Innenkreises kinematisch mit einem Generator für elektronische und/oder mechanische und/oder thermische und/oder chemische Energie verbunden sind (Fig. 1).

2. Segelwindkraftanlage nach Anspruch 1,
**dadurch gekennzeichnet,**
**dass** die Energie von der Anlage zum Generator von den Scheiben, Kettenrädern und/oder Stangen (7, 8) und/oder Rollelemente (3) übertragbar ist, welche mittels geschmeidiger Getriebe (1) mit dem Generator gekoppelt sind.

3. Segelwindkraftanlage nach Anspruch 1,
**dadurch gekennzeichnet,**
**dass** das endlos geschlossene flexible Element (1) des Außenkreises eine Kette oder ein Seil oder einen Riemen darstellt, welche in Antrieben unterschiedlicher Motoren einsetzbar ist, dass dabei die Stangen (7) an den flexiblen Elementen (1) des Außenkreises festgemacht und mit gleichem Abstand angeordnet sind und dass die Rollelemente (5) des Innenkreises zum Beispiel als Schlitten ausgebildet sind.

4. Segelwindkraftanlage nach Anspruch 1,
**dadurch gekennzeichnet,**
**dass** jede Linie des Innenkreises mindestens zwei Scheiben und/oder Kettenräder (3) enthält, an denen flexible Elemente aufgestellt sind und dass die eigentlichen flexiblen Elemente (1) in jeder Linie des Außenkreises entweder als Einzelelemente (Kette oder Riemen oder Seil) oder kombiniert (Kette + Riemen oder Kette + Seile) ausgebildet sind.

5. Segelwindkraftanlage,
**dadurch gekennzeichnet,**
**dass** mit mindestens zwei endlos geschlossene starre Führungsschienen (10), die mit mindestens drei Rollelementen (11) auf jeder Führungsschiene (10) versehen sind, einen Außenzugkreis bilden,
**dass** mindestens zwei endlos geschlossene starre Führungsschienen (2), die mit mindestens drei Rollelementen (6) auf jeder Führungsschiene (2) versehen sind, einen Innenzugkreis bilden,
**dass** mindestens drei Segelelemente (4), wobei jedes der Segelelemente (4) mittels einer Stange (7) an zwei Rollelementen (11) der starren Führungsschienen (10) des geschlossenen Außenkreises befestigt ist und dass darüber hinaus jedes der Segelelemente (4) mittels einer zweiten Stange (8)) an zwei Rollelementen (7) der gleichlaufend verlaufenden starren Führungsschienen (2) des geschlossenen Innenkreises befestigt ist (Fig. 2).

6. Segelwindkraftanlage nach Anspruch 1 oder 5,
**dadurch gekennzeichnet,**
**dass** starren Führungsschienen (2, 10) und die geschmeidigen Getriebe (1, 13) jedes Kreises, welche in Bezug auf das Segelelement (4) entgegengesetzt angeordnet sind, die gleichen Abmessungen haben und parallel zueinander angeordnet sind.

7. Segelwindkraftanlage nach Anspruch 1 oder 5,
**dadurch gekennzeichnet,**
**dass** die waagerechte Dimension des geschlossenen Innenkreises entweder ebenso groß oder ca. 10 % kleiner und die senkrechte Dimension um 70 % - 90 % kleiner ist als die des Außenkreises und
**dass** der waagerechte Arbeitshub des Segelelements (4) um das zweifache oder mehr größer ist als das entfaltete Segelelement (4).

8. Segelwindkraftanlage nach Anspruch 1 oder 5,
**dadurch gekennzeichnet,**
**dass** die Rotationsbewegung der Anlage über eine Freilaufkupplung und ein Schwungrad an eine Welle eines Stromerzeugers bzw. eines Umformers in chemische, Wärme- oder mechanische Energie übertragbar ist.

9. Segelwindkraftanlage nach Anspruch 1 oder 5,
**dadurch gekennzeichnet,**
**dass** die gesamte Konstruktion auf einem Tragrahmen aufgebaut ist, und dass der Außen- und Innenkreis senkrecht oder waagerecht zur Bodenoberfläche angeordnet ist.

10. Segelwindkraftanlage nach Anspruch 1 oder 5,
**dadurch gekennzeichnet,**
**dass** die starren geschlossenen Führungsschienen (2, 10) als Schienen, Doppel-T-Träger oder Profile aus Metall bzw. aus Verbundstoffen ausgebildet sind und
**dass** die Rollelemente (5, 6, 11) (Schlitten) so ausgeführt sind, dass sie auf den senkrecht geschlossenen starren Führungsschienen verfahrbar sind, indem ihre Betriebseigenschaften in der waagerechten, senkrechten und umgekehrten Lage erhalten bleiben.

11. Segelwindkraftanlage nach Anspruch 1 oder 5,
**dadurch gekennzeichnet,**
**dass** mehrere Segelwindkraftanlagen in eine Reihe zu einer Batterie zusammengefügt sind und
**dass** jeder Zugkreis das Arbeitselement von gleichzeitig zwei Segelwindkraftanlagen ist.

12. Segelwindkraftanlage nach Anspruch 1 oder 5,
**dadurch gekennzeichnet,**
**dass** der Innenkreis als endlos geschlossener Ketten-, Riemen- oder Seilgetriebe ausgeführt ist, welche sich unabhängig voneinander bewegen, wobei die Anzahl der Stränge der Anzahl der Segelelemente (4) entspricht und dass jeder Rand der Stangen (7, 8) der Segelelemente (4) auf jeder Seite an je einem flexiblen Element befestigt ist.

13. Segelwindkraftanlage nach Anspruch 1 oder 5,
**dadurch gekennzeichnet,**
**dass** der Abstand zwischen den Führungsschienen (2, 10) des Außen- und des Innenkreises des Arbeitsteils der Anlage der Höhe des entfalteten Segelelements (4) entspricht,
**dass** der Abstand zwischen den Führungsschienen (2, 10) des Außen- und des Innenkreises des inaktiven Teils nur für den Durchgang der Segelelemente (4) im zusammengelegten Zustand ausreicht und dass die Segelelemente (4) selbst rechteckig oder trapezförmig ausgeführt sind oder eine andere Geometrie aufweisen.

14. Segelwindkraftanlage nach Anspruch 1 oder 5,
**dadurch gekennzeichnet,**
**dass** sie mit einer Windstromkonzentrationseinrichtung versehen ist und dass ein Mantel derselben die Funktion des Tragrahmens übernimmt.

15. Segelwindkraftanlage nach Anspruch 5,
**dadurch gekennzeichnet,**
**dass** die Energie der Anlage zu einem Generator über die Stangen (7, 8) und/oder Rollelemente (3, 11) mittels geschmeidiger Getriebe (1) übertragbar ist, wobei die Getriebe (1) kinematisch mit dem Generator für elektrische und/oder mechanische und/oder thermische und/oder chemische Energie gekoppelt sind.

16. Segelwindkraftanlage nach Anspruch 5,
**dadurch gekennzeichnet,**
**dass** die kinematisch mit dem Generator gekoppelten endlos geschlossenen Ketten-, Riemen- oder Seilgetriebe die Stangen (7, 8) antreiben, welche mit Eingriffselementen für diese geschmeidigen Getriebe (1) versehen sind.

17. Segelwindkraftanlage nach Anspruch 5,
**dadurch gekennzeichnet,**
**dass** die Rollelemente (3, 11) der starren Führungsschienen (2, 10) zum Beispiel als Schlitten ausgeführt sind,
**dass** die Rollelemente (Schlitten) (3, 11) des Außen- und des Innenkreises mit Zähnen versehen sind, deren Teilung der Kettengliedteilung entspricht, dass die Zähne in das endlos geschlossene Kettengetriebe eingreifen, dass das Kettengetriebe kinematisch mit dem Energiegenerator gekoppelt ist oder
**dass** bei anderen Arten des geschmeidigen Getriebes (1) die Rollelemente (3, 11) mit Eingriffselementen versehen sind und dass das Getriebe (1) mit dem Generator verbunden ist.

18. Segelwindkraftanlage nach Anspruch 5,
**dadurch gekennzeichnet,**
**dass** die befestigten Stangen (7, 8) an den Rollelementen (Schlitten) (3, 11) des Außenkreises auf der Fahrbahn des Außenkreises mit gleichem Abstand angeordnet sind und
**dass** sie äquidistant mittels des an den Rollelementen (Schlitten) (3, 11) oder Stangen (7, 8) befestigten flexiblen Elements (welches Führungsscheiben umfasst) auf der Laufbahn des Außenkreises aufgestellt sind.

19. Selbstausrichtende Bühne der Segelwindkraftanlage,
die einen Tragrahmen mit einem darauf aufgestellten endlos geschlossenen Außenzug- und Trägerkreis und mit einem endlos geschlossenen Innenzug-und Trägerkreis versehen ist, wobei sie mit mindestens drei rechteckigen oder trapezförmigen Segelelementen (4) versehen ist,
wobei jedes der Segelelemente (4) mittels einer Stange (7) an zwei Zugelementen der entgegengesetzten Führungsschienen (10) des Außenkreises befestigt ist,
wobei darüber hinaus jedes der Segelelemente (4) mittels einer zweiten Stange (8) an zwei Zugelementen der entgegengesetzten Führungsschienen (2) des Innenkreises befestigt ist,
wobei die an den Zugelementen des Außenkreises befestigten Stangen (7) mit gleichem Abstand mittels eines flexiblen Elements angeordnet sind und das flexible Element Führungsscheiben umfasst, die auf der Laufbahn des Außenkreises aufgestellt sind und
wobei die beweglichen Elemente des Außen- und/oder des Innenkreises kinematisch mit dem Stromerzeuger bzw. mit dem Generator für andere Energiearten verbunden sind,
**dadurch gekennzeichnet,**
**dass** eine Bühne (14) mit einem Mantel oder mit seitlichen Bordwänden (15) versehen ist,
**dass** der Sockel des Tragrahmens an der Eintrittsstelle des Windstroms (9) auf einer Achse (16) befestigt ist und
**dass** die Gegenseite des Tragrahmens an der Austrittsstelle des Windstroms (9) auf Rollelemente (17) gesetzt ist.

20. Selbstausrichtende Bühne der Segelwindkraftanlage nach Anspruch 17, **dadurch gekennzeichnet,**
**dass** der Tragrahmen an der Achse (16) mittig oder zwischen der Eintrittsstelle des Windstroms (9) und der Mitte befestigt ist und dass die Ein- und Austrittsseiten des Windstroms (9) auf die Rollelemente (3, 17) gestellt sind, wobei als Rollelemente (17) Autoräder oder Walzen einsetzbar sind, die sich in einer kreisförmig geschlossenen Schienenbahn (18) bewegen.

21. Selbstausrichtende Bühne der Segelwindkraftanlage nach Anspruch 17,
**dadurch gekennzeichnet,**
**dass** der Stromerzeuger am Tragrahmen befestigt ist und dass die Stromleiter über den Hohlraum der Welle der Drehachse (16) der selbstausrichtenden Bühne (14) der Segelwindkraftanlage oder daneben zugeführt sind.

22. Windanlage, welche das Land- oder Wasserfahrzeug mit einer darauf installierten Windkraftanlage umfasst,
**dadurch gekennzeichnet,**
**dass** als Windkraftanlage eine Segelwindkraftanlage auf einer selbstausrichtenden Bühne (14) eingesetzt ist.

23. Windanlage nach Anspruch 22,
**dadurch gekennzeichnet,**
**dass** die Segelwindkraftanlage auf der selbstausrichtenden Bühne (14) über dem Fahrerinnenraum bzw. darunter aufgebaut ist.

24. Windanlage nach Anspruch 22,
**dadurch gekennzeichnet,**
**dass** die Segelwindkraftanlage auf der selbstausrichtenden Bühne (14) über eine Transmission kinematisch mit einem Antrieb des Fahrzeuges verbunden oder über eine Umsetzung der Energie der Segelwindkraftanlage zuerst in elektrische und danach in mechanische Energie gekoppelt ist.
